# EUROPÄISCHE PATENTSCHRIFT

(11) **EP 3 727 779 B1**
(45) Veröffentlichungstag und Bekanntmachung des Hinweises auf die Patenterteilung: **12.04.2023**
(21) Anmeldenummer: 18785937.6
(22) Anmeldetag: 11.10.2018
(51) Int. Cl.: B29C 35/02, B29C 33/76, B29D 23/00

(54) **VERFAHREN ZUR HERSTELLUNG EINES GEFORMTEN HOHLKÖRPERS UND VORRICHTUNG ZUR DURCHFÜHRUNG DES VERFAHRENS**
METHOD FOR PRODUCING A MOLDED HOLLOW BODY, AND DEVICE FOR CARRYING OUT THE METHOD
PROCÉDÉ DE FABRICATION D'UN CORPS CREUX MOULÉ ET DISPOSITIF DE MISE EN OEUVRE DU PROCÉDÉ

(30) Priorität: 20.12.2017 DE 102017223309
(43) Veröffentlichungstag der Anmeldung: 28.10.2020
(73) Patentinhaber: ContiTech MGW GmbH, 34346 Hann. Münden (DE)
(72) Erfinder: KREIDNER, Harald, 30419 Hannover (DE); BRILL, Hartmut, 30419 Hannover (DE); KARSTEN, Felix, 30419 Hannover (DE); KAMMANN, Stefan, 30419 Hannover (DE)
(74) Vertreter: Continental Corporation
(86) Internationale Anmeldenummer: PCT/EP2018/077659
(87) Internationale Veröffentlichungsnummer: WO 2019/120667

(56) Entgegenhaltungen:
- DE-A1- 10 354 764
- GB-A- 761 212
- GB-A- 892 654
- GB-A- 1 167 146
- US-A- 4 436 690
- US-A- 5 433 902

## Beschreibung

Die Erfindung betrifft eine Vorrichtung zur Herstellung eines geformten Hohlkörpers aus elastomerem Material.

Hohlkörper, die neben ihrer Basisform weitere Formelemente aufweisen, werden häufig mittels einer Vulkanisationsvorrichtung geformt. Dabei weist ein Vulkanisationswerkzeug die Komplementärform des Fertigteils auf. Ein Rohling, beispielsweise ein extrudierter Schlauchendabschnitt, kann in dem Vulkanisationswerkzeug durch Beaufschlagung mit Druckluft an die Wandung des Werkzeugs gepresst und vulkanisiert werden. Auf diese Weise sind beispielsweise elastische Schläuche mit ringförmigen Wulsten herstellbar.

Mit einem derartigen Verfahren kann jedoch pro Vulkanisationsvorgang nur jeweils eine begrenzte Anzahl von Teilen hergestellt werden, da jedes Teil einen Innendruck erzeugt, der von der jeweiligen Vulkanisationspresse aufzunehmen ist. Daher entscheidet die Schließkraft der Presse über die Menge der zeitgleich herstellbaren Teile, was die Ausbringung einschränken kann.

GB 1 167 146 A offenbart eine Vorrichtung gemäß dem Oberbegriff des Anspruchs 1.

Es besteht daher der Bedarf, ein Verfahren zur Herstellung der genannten Hohlkörper zu schaffen, das eine höhere Ausbringung ermöglicht.

Diese Aufgabe wird durch ein Verfahren mit mindestens folgenden Arbeitsschritten gelöst, nämlich
a) Aufschieben eines vorgefertigten Rohlings auf jeweils einen Dorn, wobei der Dorn mindestens einen Bereich mit einer Wandung aufweist, die luftdurchlässig ausgebildet ist und jeder Dorn mindestens eine Luftkammer aufweist, die mit dem mindestens einen Bereich luftdurchlässiger Wandung in Wirkverbindung steht,
b) Einbringen der Dorne mit aufgesteckten Rohlingen in einen an sich bekannten Autoklaven,
c₂) Beaufschlagung des Autoklaven mit Druck und Temperatur, wobei Luft, die zwischen den Rohlingen und den Dornen eingeschlossen ist, durch die Bereiche luftdichter Wandung in die jeweilige Luftkammer gepresst wird, dabei Ausvulkanisation der Rohlinge,
d) Entlastung des Autoklaven und Abkühlen
e) Entnehmen der Dorne mit fertig vulkanisierten und ausgeformten Hohlkörpern
f₂) Abziehen der Hohlkörper von den Domen.

Dieses Verfahren erlaubt es, mit einem Vulkanisationsprozess mehrere Hohlkörper auf einmal zu fertigen.

In einer Weiterbildung weist das Verfahren mindestens folgenden weiteren Arbeitsschritt auf, nämlich
ci) Druckbeaufschlagung der Luftkammern der Dorne mit einem vorbestimmten Innendruck

Die Druckbeaufschlagung kann bei der Abstimmung der Prozesskräfte und der durch die luftdurchlässigen Bereiche der Dorne strömende Luftmenge hilfreich sein.

In einer Weiterbildung weist das Verfahren mindestens folgenden weiteren Arbeitsschritt auf, nämlich
es) Druckanpassung zwischen den Luftkammern der Dorne und dem Autoklaven über einstellbare, in den Dornen angeordnete Druckausgleichselemente.

Auf diese Weise lassen sich die Prozessparameter, beispielsweise Viskosität des elastomeren Materials, und Luftdurchlässigkeit der Wandungsbereiche der Dorne oder die auftretenden Prozesskräfte auch in Abhängigkeit von der Prozesstemperatur gut berücksichtigen und aufeinander abstimmen.

In einer Weiterbildung weist das Verfahren mindestens folgenden weiteren Arbeitsschritt auf, nämlich
fi) Druckbeaufschlagung der Luftkammern der Dorne, dadurch Durchtritt von Luft durch die luftdurchlässigen Wandungsbereiche aus den Luftkammern zwischen die Dorne und die fertig vulkanisierten Hohlkörper, dabei Bildung eines Luftpolsters zwischen Dornen und Hohlkörpern.

Diese Luftpolster können das Abziehen der Hohlkörper vom Dorn erleichtern.

Die Erfindung betrifft eine Vorrichtung zur Durchführung des oben erläuterten Verfahrens, wobei die Vorrichtung mindestens einen Dorn aufweist, auf den ein im wesentlichen schlauchförmig ausgebildetes Rohteil aufsteckbar ist und der die Komplementärform zur vorbestimmten Endgeometrie des Hohlkörpers aufweist, wobei der Dorn Bereiche mit luftdichter Wandung und Bereiche mit luftdurchlässiger Wandung aufweist.

Derartige Dorne haben den Vorteil, dass sie in einem Autoklaven einsetzbar sind, wobei mehrere Dorne gleichzeitig in den Autoklaven einbringbar sind.

Durch die luftdurchlässige Wandung ist Luft, die beim Aufstecken des Rohlings zwischen Dorn und Wand des Rohlings eingeschlossen wird, bei Druckbeaufschlagung des Autoklaven in die korrespondierenden Luftkammern der Dorne pressbar, sodass die Rohlinge an der Komplementärform des jeweiligen Dornes formschlüssig anliegen. Da die fertigen Hohlkörper aus Elastomermaterial sind, lassen sich diese bei vollendeter Vulkanisation und Druckentlastung des Autoklaven vom Dorn wieder abziehen, wobei die Luftkammern der Dorne auch mit Druckluft beaufschlagbar sind.

Nach Abschluss der Vulkanisation und Druckentlastung der Autoklaven kann so Luft durch die entsprechenden luftdurchlässigen Bereiche zwischen den Hohlkörper und den Dorn gepresst werden, wodurch ein Luftpolster zwischen dem Hohlkörper und dem Dorn bildbar ist, so das ein Abziehen der Hohlkörper vom Dorn erleichtert ist.

Derartige luftdurchlässige Bereiche sind beispielsweise aus einem gesintertem Material ausbildbar, wobei allerdings eine definierte vorbestimmte Geometrie und Luftdurchlässigkeit der Wandung durch Sintern nur relativ ungenau herstellbar ist.

Der Erfindung lag daher die Aufgabe zugrunde, eine Vorrichtung zur Herstellung eines geformten Hohlkörpers zu schaffen, mit der das eingangs erläuterte Verfahren besonders einfach durchzuführen ist.

Diese Aufgabe wird dadurch gelöst, dass die Dorne aus axialen Segmenten luftdichter Wandung und luftdurchlässiger Wandung zusammengesetzt sind, wobei die luftdichten Segmente mit luftdurchlässigen Segmenten in einer vorbestimmten Abfolge axial aufeinanderfolgend angeordnet sind.

Diese Anordnung hat den Vorteil, dass die einzelnen Segmente separat herstellbar sind, wobei das jeweilige Fertigungsverfahren auf den Anwendungsfall, nämlich entweder luftdichte oder luftdurchlässige Wandung der Segmente optimierbar ist.

In einer Weiterbildung der Erfindung sind die Segmente mit luftdurchlässiger Wandung mit Hilfe des selektiven Lasersinterns hergestellt.

Das selektive Lasersintern hat den Vorteil, dass die Segmente mit luftdurchlässiger Wandung ohne Werkzeugkosten und mit hoher Präzision herstellbar sind. Damit ist eine besonders gut reproduzierbare Luftdurchlässigkeit der betreffenden Wandung erreichbar.

In einer Weiterbildung der Erfindung sind die Segmente mit luftdurchlässiger Wandung mit Hilfe des selektiven Laserschmelzens hergestellt.

Das selektive Laserschmelzen hat den Vorteil, dass die Segmente mit luftdurchlässiger Wandung ohne Werkzeugkosten hochgenau und mit hoher Bauteilfestigkeit herstellbar sind. Damit ist der Verschleiß der Segment mit luftdurchlässiger Wandung besonders gering.

In einer Weiterbildung der Erfindung weisen die Segmente mit luftdurchlässiger Wandung Öffnungen einer vorbestimmten Form und Größe auf, wobei die Öffnungen konisch ausgebildet sind und an ihrem zur Außenseite der Wandung weisenden Ende einen kleineren Öffnungsquerschnitt aufweisen, als an ihrem der Außenseite der Wandung abgewandten Ende.

Diese konische Geometrie hat den Vorteil, dass ggf. in die Öffnungen eindringendes Elastomer, das nach der Vulkanisation der Schläuche ebenfalls vulkanisiert ist, beim Abziehen der fertigen Schläuche abreißt und in das Innere der Dorne fällt, wo es leicht entfernbar ist. Auf diese Weise sind die Öffnungen bei der nächsten Beschickung ohne zusätzlichen Reinigungsaufwand wieder luftdurchlässig.

Anhand der Zeichnung wird nachstehend ein Ausführungsbeispiel der Erfindung näher erläutert.

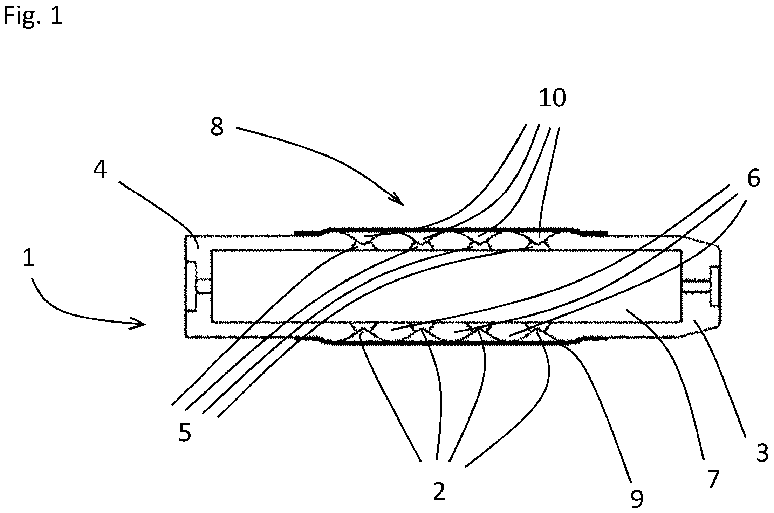

Die Fig. 1 zeigt einen erfindungsgemäßen Dorn 1 mit vier ringförmig umlaufenden Bereichen 2. Der Dorn 1 weist zwei Endstücke 3 und 4 auf, zwischen denen in axialer Richtung aufeinanderfolgend Segmente 5 und 6 in abwechselnder Reihenfolge angeordnet sind. Die Segmente 5 und 6 sind untereinander und mit dem jeweils korrespondierenden Endstück 3 oder 4 auf nicht näher gezeigte Weise fest miteinander verbunden.

Der Dorn 1 weist weiter eine Luftkammer 7 auf. Die Luftkammer 7 enthält Luft mit Atmosphärendruck. Der Dorn 1 weist weiterhin eine Formkontur 8 auf. Auf den Dorn 1 ist ein Schlauchrohling 9 aus unvulkanisiertem Elastomermaterial aufgesteckt.

Der Dorn 1 mit Rohling 9 ist in einem hier nicht dargestellten Autoklaven angeordnet. Der Schlauchrohling 9 liegt über der Formkontur 8 des Dorns 1 nicht formschlüssig an, da der Innendruck der Luftkammer 7 und der Druck im nicht gezeigten Autoklaven in dem gezeigten Zustand noch gleich sind. Dadurch ist ein Luftpolster 10 zwischen dem Dorn 1 und dem Rohling 9 eingeschlossen.

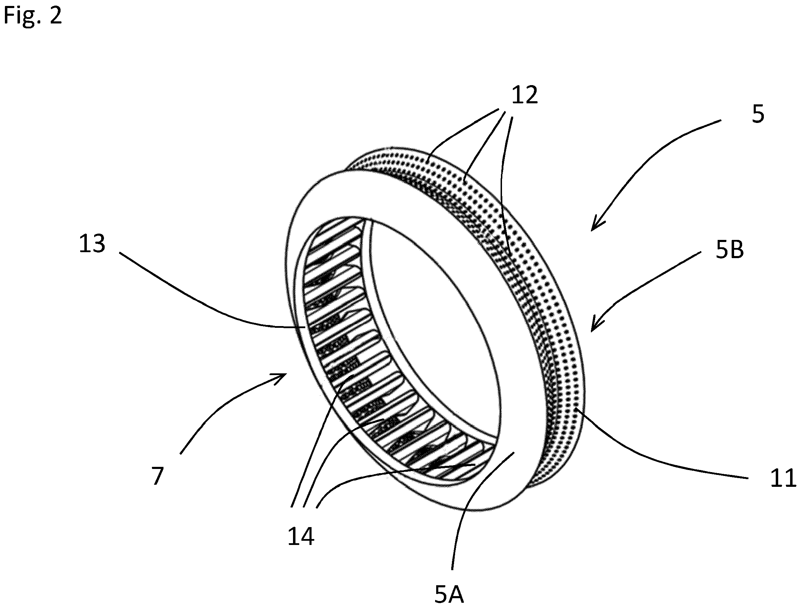

Die Fig. 2 zeigt ein Segment 5 als Einzelteil in einer perspektivischen Ansicht. Auf seiner dem hier nicht gezeigten Schlauchrohling zugewandten Außenwand 11 weist das Segment 5 eine Vielzahl von Öffnungen 12 auf. Diese Öffnungen 12 dienen dazu, einen Austausch der zwischen dem Schlauchrohling 9 und dem Dorn 1 eingeschlossenen Luft mit der Luftkammer 7, wie in Fig. 1 gezeigt, zu ermöglichen. Das Segment 5 weist an seiner der hier nur symbolisch angedeuteten Luftkammer 7 zugeordneten Innenseite 13 Stege 14 auf, die in axialer Richtung des Segments 5 verlaufen und eine Versteifung der Segmentes 5 in axialer Richtung bilden. Anschlussflächen 5A und 5B dienen dazu, die Segmente an ihre benachbarten, hier nicht gezeigten Segmente ohne luftdurchlässige Wandung anzuschließen.

Die Segmente 5 des Dornes 1 sind mittels des selektiven Lasersinterns hergestellt. Dieses Verfahren ermöglicht die Herstellung von hinterschnittenen Geometrien, wie sie bei den Segmenten 5 vorhanden sind.

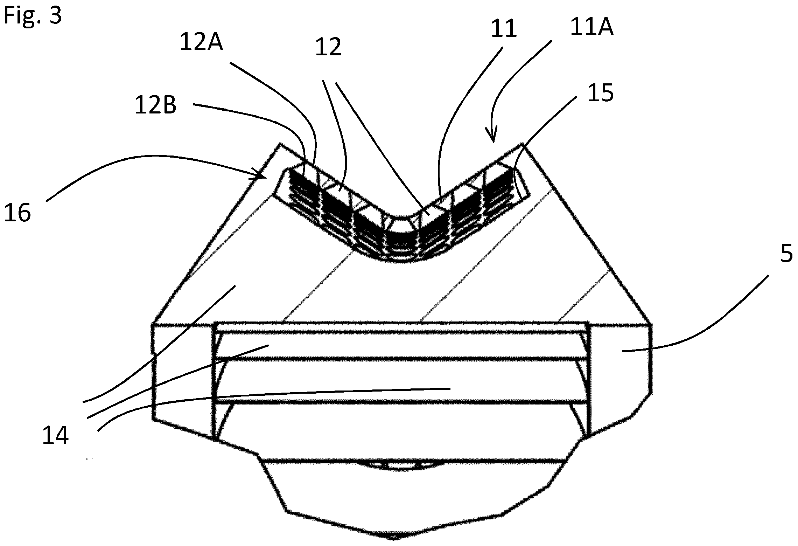

Die Fig. 3 zeigt einen Teilschnitt durch ein Segment 5. Der Teilschnitt verläuft in dieser Ansicht durch einen der Stege 14. Die Segmente 5 weisen eine Außenwand 11 mit einer Außenseite 11A und einer Innenseite 11B auf. In der Außenwand 11 sind Öffnungen 12 angeordnet. Die Innenseite 11B der Außenwand 11 ist von einer nach radial Außen gerichteten Endkante 15 des Steges 14 durch einen Spalt 16 beabstandet. Die Öffnungen 12 sind konisch ausgebildet, wobei der zur Außenseite 11A der Wandung 11 weisende Öffnungsquerschnitt 12A kleiner ist als der gegenüberliegende Öffnungsquerschnitt 12B. Dies hat den Vorteil, dass ggf. in die Öffnungen eingedrungenes, hier nicht gezeigtes Elastomer beim Abziehen von hier nicht dargestellten fertigen Schläuchen abreißt und in das Innere 7 der Dorne 1 fällt, wo es leicht entfernbar ist.

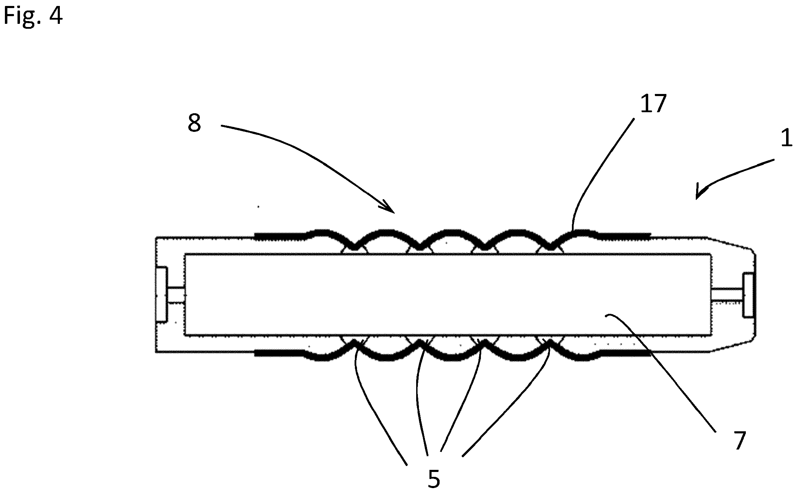

In Fig. 4 ist der Dorn 1 mit einem fertig ausvulkanisierten Hohlkörper 17 gezeigt. Die in dem ursprünglichen, hier nicht mehr vorhandenen Luftpolster vorher eingeschlossene Luft ist durch die Segmente 5 in die Luftkammer 7 verschoben. Durch die im nicht gezeigten Autoklaven herrschenden Druck- und Temperaturverhältnisse ist der Rohling an die Formkontur 8 des Dornes 1 angepresst und zu dem elastischen Hohlkörper 17 mit vorbestimmter, zur Formkontur 8 des Dornes 1 korrespondierender Form fertiggestellt.

### Bezugszeichenliste

### (Teil der Beschreibung)

- 1: Dorn
- 2: umlaufende Bereiche des Dornes 1
- 3, 4: Endstücke des Dornes 1
- 5: luftdurchlässige Segmente des Dornes 1
- 5A, 5B: Anschlussflächen der Segmente 5
- 6: luftdichte Segmente des Dornes 1
- 7: Luftkammer im Dorn 1
- 8: Formkontur des Dornes 1
- 9: Schlauchrohling
- 10: Luftpolster zwischen Rohling 9 und Dorn 1
- 11: Außenwand der Segmente 5
- 11A, 11B: Außen- und Innenseite der Außenwand 11
- 12: Öffnungen in den Segmenten 5
- 12A, 12B: Öffnungsquerschnitte der Öffnungen 12
- 13: Innenseite der Segmente 5
- 14: Stege in den Segmenten 5
- 15: Endkante der Stege 14
- 16: Spalt zwischen Außenwand 11 und der Endkante der Stege14
- 17: fertig vulkanisierter Hohlkörper

## Patentansprüche

1. Vorrichtung zur Herstellung eines geformten Hohlkörpers (17), wobei die Vorrichtung mindestens einen Dorn (1, 3, 4) aufweist, auf den ein im wesentlichen schlauchförmig ausgebildetes Rohteil (9) aufsteckbar ist und der die Komplementärform (8) zur vorbestimmten Endgeometrie des Hohlkörpers (17) aufweist, wobei der Dorn (1, 3, 4) Bereiche mit luftdichter Wandung (6) und Bereiche mit luftdurchlässiger Wandung (2, 5) aufweist, **dadurch gekennzeichnet, dass** die Dorne (1, 3, 4) aus axialen Segmenten luftdichter Wandung (6) und luftdurchlässiger Wandung (5) zusammengesetzt sind, wobei die luftdichten Segmente (6) mit luftdurchlässigen Segmenten (5) in einer vorbestimmten Abfolge axial aufeinanderfolgend angeordnet sind.

2. Vorrichtung nach Anspruch 1, **dadurch gekennzeichnet, dass** die die luftdurchlässige Wandung (5) aufweisenden Segmente aus selektiv lasergesinterten Werkstoffen ausgebildet sind.

3. Vorrichtung nach Anspruch 1, **dadurch gekennzeichnet, dass** die die luftdurchlässige Wandung (5) aufweisenden Segmente aus selektiv lasergeschmolzenen Werkstoffen ausgebildet sind.

4. Vorrichtung nach Anspruch 1, 2 oder 3, **dadurch gekennzeichnet, dass** die Segmente mit luftdurchlässiger Wandung (5) Öffnungen (12) einer vorbestimmten Form und Größe aufweisen, wobei die Öffnungen (12) konisch ausgebildet sind und an ihrem zur Außenseite (11A) der Wandung (11) weisenden Ende (12A) einen kleineren Öffnungsquerschnitt aufweisen, als an ihrem der Außenseite (11A) der Wandung (11) abgewandten Ende.

## Claims

1. Device for producing a moulded hollow body (17), wherein the device has at least one mandrel (1, 3, 4) onto which is able to be pushed a blank (9) that is configured so as to be substantially tubular and has the complementary shape (8) of the predetermined final geometry of the hollow body (17), wherein the mandrel (1, 3, 4) has regions having an air-tight wall (6) and regions having an air-permeable wall (2, 5), **characterized in that** the mandrels (1, 3, 4) are assembled from axial segments with an air-tight wall (6) and an air-permeable wall (5), wherein the air-tight segments (6) and the air-permeable segments (5) axially are disposed sequentially in a predetermined order.

2. Device according to Claim 1, **characterized in that** the segments having the air-permeable wall (5) are configured from materials which are selectively laser-sintered.

3. Device according to Claim 1, **characterized in that** the segments having the air-permeable wall (5) are configured from materials which are selectively laser-melted.

4. Device according to Claim 1, 2 or 3, **characterized in that** the segments having an air-permeable wall (5) have openings (12) of a predetermined shape and size, wherein the openings (12) are configured so as to be conical and on the end (12A) thereof that points towards the external side (11A) of the wall (11) have a smaller opening cross section than on the end thereof that faces away from the external side (11A) of the wall (11).

## Revendications

1. Dispositif de fabrication d'un corps creux moulé (17), le dispositif comportant au moins un mandrin (1, 3, 4) sur lequel peut être enfichée une ébauche sensiblement tubulaire (9) et qui a la forme complémentaire (8) par rapport à la géométrie d'extrémité prédéterminée du corps creux (17), le mandrin (1, 3, 4) comportant des zones à paroi étanche à l'air (6) et des zones à paroi perméable à l'air (2, 5), **caractérisé en ce que** les mandrins (1, 3, 4) sont composés de segments axiaux de paroi étanche à l'air (6) et de paroi perméable à l'air (5), les segments étanches à l'air (6) étant disposés avec des segments perméables à l'air (5) de manière axialement successive selon une séquence prédéterminée.

2. Dispositif selon la revendication 1, **caractérisé en ce que** les segments comportant la paroi perméable à l'air (5) sont formés à partir de matériaux sélectivement frittés au laser.

3. Dispositif selon la revendication 1, **caractérisé en ce que** les segments comportant la paroi perméable à l'air (5) sont formés à partir de matériaux sélectivement fondus au laser.

4. Dispositif selon la revendication 1, 2 ou 3, **caractérisé en ce que** les segments à paroi perméable à l'air (5) comportent des ouvertures (12) de forme et de dimension prédéterminées, les ouvertures (12) étant coniques et ayant, à leur extrémité (12A) dirigée vers partie extérieur (11A) de la paroi (11), une section transversale d'ouverture inférieure à celle à leur extrémité opposée au côté extérieur (11A) de la paroi (11).
